**Europäisches Patentamt**

**European Patent Office**

**Office européen des brevets**

(19)

(11) **EP 0 776 101 A2**

(12) **EUROPÄISCHE PATENTANMELDUNG**

(43) Veröffentlichungstag:
28.05.1997 Patentblatt 1997/22

(51) Int. Cl.$^6$: **H04B 7/08**

(21) Anmeldenummer: 96107315.2

(22) Anmeldetag: 09.05.1996

(84) Benannte Vertragsstaaten:
AT CH DE FI FR GB IT LI SE

(30) Priorität: 23.11.1995 DE 19543622

(71) Anmelder: **Deutsche Telekom AG**
**53113 Bonn (DE)**

(72) Erfinder: **Kadel, Gerhard, Dr.-Ing.**
**64293 Darmstadt (DE)**

(54) **Verfahren und Vorrichtung zum bidirektionalen Übertragen von hochratigen Digitalsignalen unter Verwendung von Raumdiversity**

(57)    Die Erfindung betrifft ein Verfahren zum bidirektionalen Übertragen von hochratigen Digitalsignalen zwischen wenigstens einer Basisstation und wenigstens einer Kundeneinrichtung über eine Funkverbindung sowie eine Basisstation zur Durchführung des Verfahrens und ein digitales Funknetz.

Die Erfindung löst das Problem, das bei der Übertragung von Digitalsignalen hoher Datenraten über frequenzselektive und zeitvariante Funkkanäle Übertragungsverfahren notwendig sind, die mit möglichst geringem Aufwand die durch die Eigenschaften des Funkkanals verursachten Beeinträchtigungen der digitalen Signalübertragung minimieren. Dieses Problem wird erfindungsgemäß dadurch gelöst, daß das von der Kundeneinrichtung abgestrahlte Digitalsignal an wenigstens zwei räumlich getrennt angeordneten Diversity-Antennen einer Empfangseinrichtung der Basisstation empfangen wird. Das Empfangssignal jeder Diversity-Antenne wird zunächst in den Frequenzbereich transformiert und anschließend einer Diversity-Kombination unterworfen. Das kombinierte Signal wird danach im Frequenzbereich entzerrt und nach einer Rücktransformation in den Zeitbereich einem Demodulator zugeführt.

EP 0 776 101 A2

## Beschreibung

Die Erfindung betrifft ein Verfahren zum bidirektionalen Übertragen von hochratigen Digitalsignalen zwischen Wenigstens einer Basisstation und wenigstens einer Kundeneinrichtung über eine Funkverbindung nach Anspruch 1, eine in Anspruch 9 umschriebene Basisstation für ein digitales Funknetz zur Ausführung des Verfahrens und ein in Anspruch 20 definiertes digitales Funknetz zur Ausführung des Verfahrens.

Bei der Übertragung von hochratigen digitalen Signalen über frequenzselektive und Zeitvariante Funkkanäle besteht die Schwierigkeit darin, Übertragungsverfahren und Übertragungsanlagen zu finden, die mit einem möglichst geringen Aufwand die durch die Eigenschaften des Funkkanals verursachten Beeinträchtigungen der digitalen Signalübertragung minimieren und gleichzeitig eine hohe Bandbreiteneffizient erreichen können. Die bisher bekannten Verfahren zur Übertragung von Digitalsignalen hoher Datenraten lassen sich grundsätzlich in Einträger-Verfahren und Mehrträger-Verfahren einteilen.

Bei Einträgerverfahren wird der Datenstrom mit einem geeigneten Modulationsverfahren, wie z.B. dem Gaussian Minimum Shift Keying-Verfahren, auf einen Hochfrequenzträger aufmoduliert, in geeigneter Weise codiert und ausgesendet. Die von einer Sendestation ausgesendeten Signale werden an zahlreichen, sich in dem Funkfeld befindlichen Objekten reflektiert und breiten sich daher über mehrere Funkwege zur Empfangsstation aus. Zwar kann bei Signalen, deren Bandbreite deutlich größer ist als die Kohärenzbandbreite des Funkkanals (das ist die Bandbreite, in der die Übertragungsfunktion des Funkkanals im wesentlichen konstant ist) aufgrund der statistischen Unabhängigkeit der Ausbreitungswege eine Reduktion der Tiefschwundeinbrüche (Mehrwege-Diversity) erreicht werden. Es entstehen jedoch gleichzeitig Intersymbolinterferenzen, die im Empfänger durch eine Entzerrung des Signals ausgeglichen werden müssen. Hierzu verwendet man beispielsweise im Zeitbereich arbeitende Viterbi-Entzerrer, die auf dem Maximum Likelihood Sequence Estimation-Ansatz basieren, oder Entzerrer mit einer quantisierten Rückkopplung. Digitalsignale mit hohen Datenraten besitzen allerdings entsprechend kurze Symboldauern, wodurch Intersymolinterferenzen über eine große Anzahl von Symbolen entstehen können, die mit herkömmlichen Viterbi-Entzerrern oder Entzerrern mit quantisierter Rückkopplung nicht beseitigt werden können. Die Entwicklung leistungsstarker Zeitbereichs-Entzerrer, die diese Aufgabe lösen könnten, scheitert gegenwärtig an zu hohen Hardwareerfordernissen.

Demgegenüber entstehen bei Mehrträgerverfahren, bei denen die Signalübertragung gleichzeitig über eine Vielzahl von Unterträgern erfolgt, keine Beeinträchtigungen durch Intersymbolinterferenzen, solange die Impulsantworten des Funkkanals zeitlich kürzer sind als die zwischen die Mehrträger-Symbole eingefügten Guard-Intervalle. Allerdings zeigen Mehrträger-Verfahren sowohl in frequenzselektiven als auch in nicht frequenzselektiven Schwundkanälen stets eine sehr langsame Abnahme der Bitfehlerrate als Funktion des Signal-/Rauschleistungsverhältnisses, da für jeden Unterträger (der in Analogie zu einer schmalbandigen Signalübertragung mit einem Träger betrachtet werden kann) eine Rayleigh-Verteilung der Amplituden vorliegt. Als weiterer Nachteil ist die hohe Dynamik des Zeitsignals und damit die verbundenen Linearitätsanforderungen an die übertragungstechnischen Komponenten anzusehen, die zu aufwendigen schaltungstechnischen Realisierungen führen würden. Ein Nachteil gegenüber Einträgerverfahren liegt auch in höheren Anforderungen an die Frequenzstabilität der Sende- und Empfangsoszillatoren.

In den beiden Aufsätzen "An Analysis of Orthogonal Frequency-Division Multiplexing for Mobile Radio Applications"; Proceedings of the IEEE Vehicular Technology Conference, 1994, Seiten 1635-1639, und "Frequency-Domain Equalization of Mobile Radio and Terrestrial Broadcast Channels"; Proceedings of the IEEE International Conference on Global Communications, 1994, Seiten 1-5, von Sari, H., Karam, G., Jeanclaude, sind Einträgerverfahren mit einer Entzerrung der Empfangssignale im Frequenzbereich offenbart, die im Vergleich zu den Mehrträgerverfahren bei einer uncodierten Signalübertragung ein wesentliches günstigeres Bitfehlerverhalten aufweisen. Mit einem Frequenzbereichs-Entzerrer können Intersymbolinterferenzen über eine Vielzahl von Symboldauern beseitigt werden. Allerdings wird bei den offenbarten Einträgerverfahren nicht die Übertragungsqualität erreicht, die mit Zeitbereichs-Entzerrern erzielt werden könnte. Außerdem erfordern Frequenzbereichs-Entzerrer eine höhere Schaltungskomplexität in den Empfängern sowohl der Basisstation als auch der Kundeneinrichtungen, da jeder Empfänger eine Transformation in den Frequenzbereich und nach der Entzerrung im Frequenzbereich eine Rücktransformation in den Zeitbereich leisten muß. Dies ist insbesondere vor dem Gesichtspunkt, daß die Kundeneinrichtungen möglichst einfach und kostengünstig ausgebildet sein sollten, als nachteilig anzusehen.

Der Erfindung liegt daher die Aufgabe zugrunde, ein Verfahren zum bidirektionalen Übertragen von hochratigen Digitalsignalen über eine Funkverbindung, eine Basisstation für ein digitales Funknetz zur Ausführung des Verfahrens sowie ein digitales Funknetz zur Verfügung zu stellen, welche die Vorteile der bekannten Verfahren nutzen und gleichzeitig deren Nachteile verringern oder sogar gänzlich vermeiden.

Dieses technische Problem löst die Erfindung zum einen mit den Verfahrensschritten des Anspruchs 1 und den Merkmalen des Anspruchs 9 sowie des Anspruchs 20. Vorteilhafte Weiterbildungen sind in den abhängigen Ansprüchen umschrieben.

Die erfindungsgemäße Lösung besteht insbesondere darin, daß ein Einträgerverfahren angewendet und die funkspezifische Signalverarbeitung im Empfänger einer Basisstation im Frequenzbereich durchgeführt. Dazu wird zunächst das von einer stationären oder mobilen Kundeneinrichtung abgestrahlte und sich aufgrund von Reflexionen an Objekte über mehrere Funkkanäle ausbreitende Digitalsignal an wenigstens zwei räumlich getrennt angeordneten Diversity-Antennen einer Empfangseinrichtung der Basisstation empfangen. Dieser Empfang wird auch als Diversity-Empfang bezeichnet. Jede Diversity-Antenne ist dabei Bestandteil eines getrennten Diversity-Zweiges. Das Empfangssignal jedes Diversity-Zweiges wird in das Basisband umgesetzt. Danach wird es in den Frequenzbereich transformiert und anschließend einer Diversity-Kombination unterworfen. Die Diversity-Kombination kann auf der Grundlage des bekannten Maximum Ratio Combining (MRC)-Ansatzes oder auf der Grundlage eines Selection Combining-Ansatzes durchgeführt werden. Anschließend wird das kombinierte Signal im Frequenzbereich entzerrt und schließlich in den Zeitbereich zurücktransformiert. Das in den Zeitbereich zurücktransformierte Digitalsignal wird einem an sich bekannten Demodulator zugeführt, der die Nutzdaten aus dem komplexen Basisbandsignal zurückgewinnt. Dank der gemeinsamen Durchführung einer Diversity-Kombination sowie einer Entzerrung des kombinierten Signals im Frequenzbereich wird ein deutlich besseres Bitfehlerverhalten erreicht, als dies bei einem Frequenzbereichs-Entzerrer ohne eine Diversity-Kombination möglich wäre. Dies ist dadurch begründet, daß die frequenzselektiven Eigenschaften für jeden Diversity-Zweig bzw. Funkkanal, über den sich das ausgesendete Digitalsignal ausbreitet, dekorreliert sind. An den Stellen nämlich, an denen die Übertragungsfunktion eines Funkkanals tiefe Amplitudeneinbrüche verzeichnet, weist der andere Funkkanal mit großer Wahrscheinlichkeit hohe Amplituden auf. Somit zeigt die resultierende Übertragungsfunktion nach einer Diversity-Kombination wesentlich geringere Amplitudenschwankungen als die jeweilige Übertragungsfunktion der beiden einzelnen Funkkanäle bzw. Diversity-Zweige.

Ungeachtet der jeweils angewandten Diversity-Kombination muß für jeden Funkkanal, über den sich das Digitalsignal aufgrund von Reflexionen an Objekten ausbreitet, die dazu gehörende Übertragungsfunktion ermittelt werden. Dazu werden zunächst von der Kundeneinrichtung, die mit einer Basisstation Daten austauschen möchte, zu vorbestimmten Zeitintervallen Referenzsymbole ausgesendet, die zwischen der Kundeneinrichtung und der Basisstation zuvor vereinbart worden sind. Die Empfangseinrichtung in der Basisstation ist derart ausgebildet, daß sie aus den Referenzsymbolen die Übertragungsfunktion sowie die dazu gehörende, konjugiert komplexe Übertragungsfunktion für jeden Funkkanal berechnen kann. Darüber hinaus wird in der Empfangseinrichtung die resultierende Funkkanal-Übertragungsfunktion berechnet.

Vorzugsweise wird die Diversity-Kombination auf der Grundlage des sogenannte Maximum Ratio Comining-Ansatzes durchgeführt, bei dem das Frequenzspektrum jedes Empfangssignals mit der komplex konjugierten Funkkanal-Übertragungsfunktion des entsprechenden Funkkanals multipliziert wird. Anschließend werden alle auf diese Weise gewichteten Spektralanteile der Empfangssignale jedes Diversity-Zweiges addiert. Das kombinierte Signal wird anschließend im Frequenzbereich dadurch entzerrt, daß das Kombinationssignal mit der zuvor in der Empfangseinrichtung berechneten, resultierenden Funkkanal-Übertragungsfunktion dividiert wird. Das auf diese Weise entzerrte Signal wird anschließend einer Zeitbereichstransformation unterworfen und zum Demodulator weitergeleitet.

Um einen guten Kompromiß zwischen dem Maß einer Rauschanhebung und der verbleibenden Restverzerrung eingehen zu können, ist es zweckmäßig, die Entzerrung des kombinierten Signals nach dem Kriterium des kleinsten mittleren Fehlerquadrats durchzuführen. Hierzu wird zu der resultierenden Funkkanalübertragungsfunktion ein Faktor $\alpha$ hinzuaddiert, der zum inversen mittleren Signal-Rauschleistungsverhältnis an der Empfangseinrichtung der Basisstation proportional ist. Dank dieser Entzerrung des kombinierten Signals im Frequenzbereich wird die Intersymbolinterferenz vergleichbar wie bei Mehrträgerverfahren im wesentlichen vollständig beseitigt, wenn die Übertragung der Digitalsignale blockweise erfolgt und ein zwischen den Blöcken eingefügtes Guard-Intervall eine zeitliche Länge aufweist, die größer ist als die Impulsantwort des Funkkanals.

Eine vorteilhafte Weiterbildung besteht darin, daß das von der Basisstation zur Kundeneinrichtung zu übertragende hochratige Digitalsignal (diese Übertragungsrichtung wird auch als Downlink- bzw. Abwärts-Richtung bezeichnet) in der Basisstation in den Frequenzbereich transformiert und an wenigstens zwei parallel geschaltete Zweige angelegt wird. Das an jeden Zweig angelegte Signal wird im Frequenzbereich vorverzerrt und anschließend in den Zeitbereich zurücktransformiert. Das in den Zeitbereich zurücktransformierte Signal jedes Zweiges wird nach einer Umsetzung in die Hochfrequenzlage über eine jedem Zweig zugeordnete Antenne abgestrahlt, so daß an der Empfangseinrichtung der Kundeneinrichtung ein unverzerrtes Signal anliegt. Dank dieser Vorverzerrung des zu übertragenden Signals im Frequenzbereich in der Basisstation kann die Empfangseinrichtung jeder Kundeneinrichtung mit einer geringeren Komplexität und daher kostengünstiger hergestellt werden. Darüber hinaus wird eine Übertragungsqualität erreicht, die nur noch von dem Signal-Rauschleistungsverhältnis des Empfängers der Kundeneinrichtung und nicht mehr von den frequenzselektiven Kanaleigenschaften abhängt. Darüber hinaus erfordert die Abstrahlung vorverzerrter Digitalsignale über wenigstens zwei Antennen auch bei frequenzselektiven Funkkanälen lediglich die gleiche mittlere Sendeleistung wie bei einem unverzerrten Funkkanal, ohne daß eine Verschlechterung des Bitfehlerverhaltens an der Empfangseinrichtung der Kundeneinrichtung auftritt. Würde man hingegen das Digitalsignal nur über eine Antenne der Basisstation abstrahlen, müßte bei einem frequenzselektiven Kanal eine wesentlich größere mittlere Sendeleistung als bei einem unverzerrten Übertragungskanal aufgewendet werden. Bei der Abstrahlung über zwei Antennen kann auch bei frequenzselektiven Kanälen trotz Vorverzerrung die gleiche mittlere Sendeleistung wie im unverzerrten Fall beibehalten werden, ohne daß eine Verschlechterung des Bitfehlerverhaltens an der Empfangseinrichtung der Kundeneinrichtung auftritt.

Die Erfindung wird nachstehend anhand der Ausführungsbeispiele in Verbindung mit den beiliegenden Zeichnungen näher erläutert. Es zeigen:

| | |
|---|---|
| Fig. 1 | ein vereinfachtes Blockschaltbild einer bidirektionalen breitbandigen Funkverbindung zwischen einer Basisstation und einer Kundeneinrichtung, bei denen das erfindungsgemäße Verfahren Anwendung findet, |
| Fig. 2 | ein Blockschaltbild einer Signalverarbeitungseinrichtung, die in der in Fig. 1 dargestellten Basisstation verwendet wird, |
| Fig. 3 | ein Blockschaltbild einer Signalaufbereitungseinrichtung, die in der in Fig. 1 dargestellten Basisstation verwendet wird, |
| Fig. 4a und 4b | die Übertragungsfunktion des ersten bzw.zweiten Funkkanals, |
| Fig. 4c | die resultierende Funkkanal-Übertragungsfunktion nach einer Maximum Ratio-Kombination im Frequenzbereich, |
| Fig. 5 | die zeitliche Struktur von zu sendenden Signalblöcken, |
| Fig. 6 | die aus Computersimulationen gewonnenen Bitfehlerraten für eine in Aufwärtsrichtung betriebene Signalübertragung, |
| Fig. 7a | den zeitlichen Verlauf der Sendeleistung für eine in Abwärtsrichtung betriebene Signalübertragung ohne Diversity und mit einer Antenne, |
| Fig. 7b und 7c | jeweils den zeitlichen Verlauf der Sendeleistung der ersten bzw. zweiten Antenne für eine in Abwärtsrichtung betriebene Signalübertragung, bei der das auszusendende Signal über zwei Antennen abgestrahlt wird. |

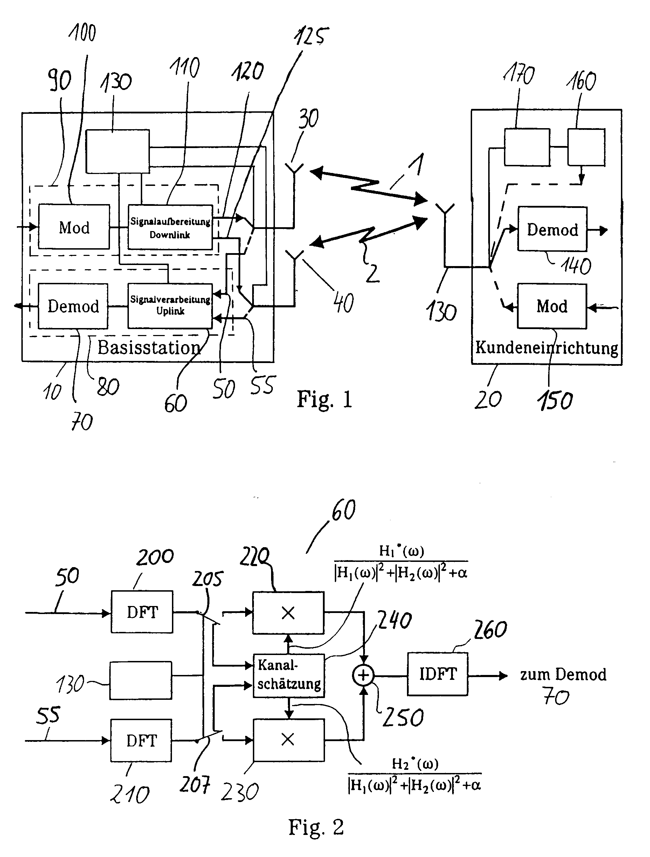

In Fig. 1 ist das Blockschaltbild einer bidirektionalen Funkverbindung zwischen einer Basisstation 10 und einer Kundeneinrichtung 20 dargestellt. Es sei allerdings darauf hingewiesen, daß die in Fig. 1 gezeigte Basisstation 10 und die Kundeneinrichtung 20 Bestandteil eines digitalen Funknetzes sein können, die mehrere mobile oder stationäre Basisstationen und mehrere stationäre und/oder mobile Kundeneinrichtungen aufweisen kann.

Die Basisstation 10 umfaßt beispielsweise zwei Antennen 30 und 40, die sowohl zum Empfangen eines Digitalsignals von der Kundeneinrichtung 20 (diese Übertragungsrichtung wird auch Uplink- oder Aufwärtsrichtung genannt) als auch zum Senden eines Digitalsignals von der Basisstation 10 zur Kundeneinrichtung 20 (diese Übertragungsrichtung wird auch Downlink- oder Abwärtsrichtung genannt) benutzt werden können. Dazu sind an sich bekannte Sende-Empfangsweichen vorgesehen, die je nach Betriebsmodus die Antennen 30 und 40 in den Sende- bzw. Empfangsbetrieb umschalten. Die Antenne 30 bildet den Eingang eines ersten Diversity-Zweiges 50, wohingegen die Antenne 40 den Eingang eines zweiten Diversity-Zweiges 55 bildet. Die beiden Diversity-Zweige 50, 55 wiederum sind mit den Eingängen einer Signalverarbeitungseinrichtung 60 verbunden, die erfindungsgemäß mit dem Empfangsignal jedes Diversity-Zweiges 50, 55 eine Diversity-Kombination im Frequenzbereich durchführt, das kombinierte Signal anschließend im Frequenzbereich entzerrt und in den Zeitbereich zurücktransformiert. Ein möglicher schaltungstechnischer Aufbau und die Arbeitsweise der Signalverarbeitungseinrichtung 60 sind weiter unten in Verbindung mit Fig. 2 im einzelnen beschrieben. Der Ausgang der Signalverarbeitungseinrichtung 60 ist an einen an sich bekannten Demodulator 70 angelegt, der aus dem komplexen Basisbandsignal die digitalen Nutzdaten zurückgewinnt. Die beiden im Empfangsmodus arbeitenden Antennen 30 und 40, die beiden Diversity-Zweige 50 und 55, die Signalverarbeitungseinrichtung 60 und der Demodulator 70 bilden zusammen einen Diversity-Empfänger 80. Weitere nicht dargestellte Komponenten der Empfangseinrichtung 60 sind beispielsweise eine Einrichtung zur Umsetzung des Empfangssignals in das Basisband und ein Analog-Digitalwandler in jedem Diversity-Zweig 50, 55.

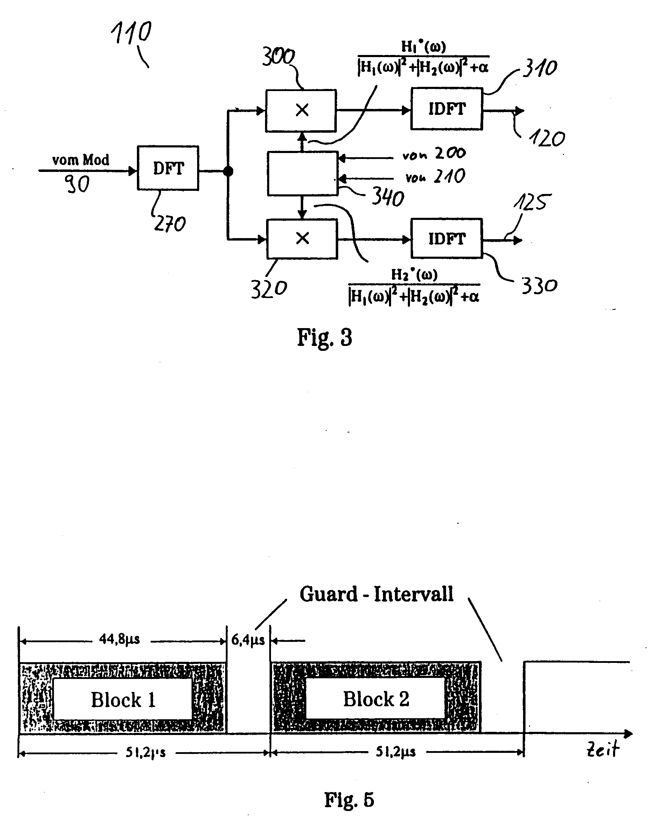

Die Basisstation 10 enthält ferner eine Sendeeinrichtung 90, zu der im vorliegenden Beispiel auch die beiden im Sendemodus arbeitenden Antennen 30 und 40 gehören. Die Sendeeinrichtung 90 umfaßt zudem einen an sich bekannten Modulator 100, der aus den digitalen Nutzdaten das komplexe Basisbandsignal erzeugt. Ausgangsseitig ist der Modulator 100 mit einer Signalaufbereitungseinrichung 110 verbunden, die das zu sendende Signal erfindungsgemäß auf zwei Zweige 120, 125 aufteilt, im Frequenzbereich vorverzerrt und den beiden Antennen 30 und 40 zuführt. Die Sendeeinrichtung 90 weist außerdem in jedem Zweig 120, 125 einen Digital-Analogwandler und eine Einrichtung zum Umsetzen des Sendesignals in den Hochfrequenzbereich auf( nicht dargestellt). Eine mögliche schaltungstechnische Realisierung der Signalaufbereitungseinrichtung 110 und das durch sie durchgeführte Verfahren sind weiter unten in Verbindung mit Fig. 3 noch im einzelnen erläutert.

Eine Steuereinrichtung 130 in der Basisstation 10 sorgt zum einen für das Hin- und Herschalten der Antennen 30 und 40 in den Sende- bzw. den Empfangsbetrieb und zur funktionsrichtigen Steuerung der Signalaufbereitungseinrichtung 110 und der Signalverarbeitungseinrichtung 60.

Die Kundeneinrichtung 20 umfaßt beispielsweise eine Sende-Empfangsantenne 130, die im Empfangsbetrieb mit einem an sich bekannten Demodulator 140 und im Sendebetrieb mit einem an sich bekannten Modulator 150 verbunden ist. Eine Generatoreinrichtung 160 dient dazu, zwischen der Kundeneinrichtung 20 und der Basisstation 10 vereinbarte Referenzsymbole zu erzeugen, die zu vorbestimmten Zeitintervallen an die Basisstation gesendet werden. Die Aufgabe der Referenzsymbole wird weiter unten noch ausführlich beschrieben. Eine Steuereinrichtung 170 sorgt zum einen für ein richtiges Umschalten der Sende-/Empfangsantenne 130 in den Sende- bzw. Empfangsbetrieb und zum anderen dazu, die Generatoreinrichtung 160 immer dann zu aktivieren, wenn Referenzsymbole erzeugt und zur Basisstation 10 übermittelt werden sollen.

Wir betrachten zunächst den Fall, daß die Kundeneinrichtung 20 ein Digitalsignal mittels eines modulierten Hochfrequenzträgers zur Basisstation 10 übertragen möchte. Diese Übertragungg, bei der die Kundeneinrichtung 20 als Sendeeinrichtung und die Basisstation 10 als Empfangsstation fungiert, wird als Uplink-Übertragung bezeichnet. Es sei nun angenommen, daß das gesendete Digitalsignal sich über die beiden Funkkanäle 1 und 2 zu dem beiden Antennen 30 und 40 ausgebreitet hat und von ihnen empfangen worden ist.

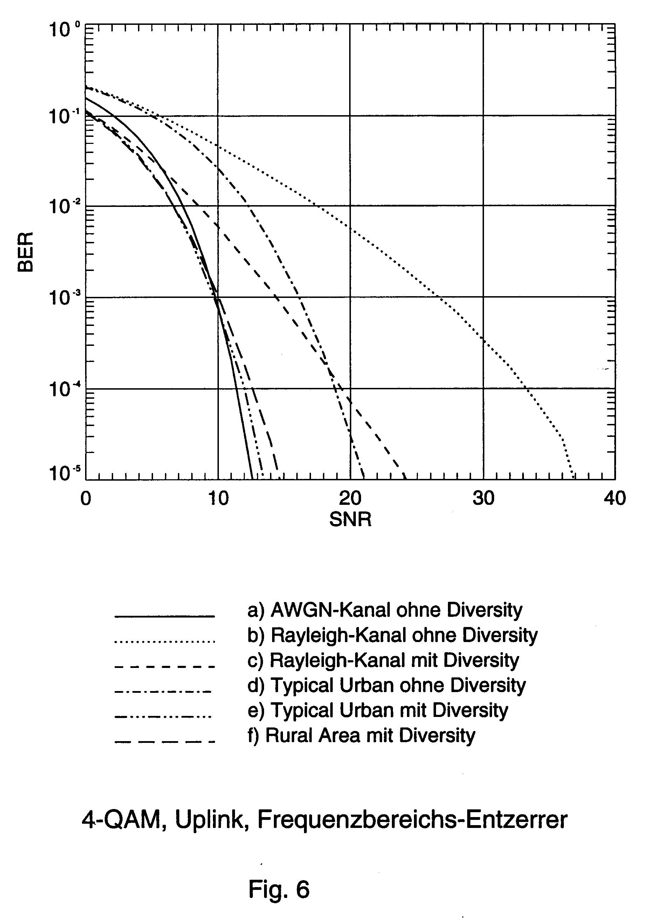

Wir betrachten nunmehr die Fig. 2. Dort ist die Signalverarbeitungseinrichtung 60 der Empfangseinrichtung 80 der Basisstation 10 detaillierter dargestellt. Die Signalverarbeitungseinrichtung 60 umfaßt die beiden Diversity-Zweige 50 und 55. In jeden Diversity-Zweig 50, 55 ist eine DFT-Einrichtung 200 bzw. 210 geschaltet, die mit dem jeweiligen Empfangssignals nach einer Umsetzung in das Basisband eine diskrete Fourier-Transformation (DFT) durchführt. Mit anderen Worten transformiert die DFT-Einrichtung 200 das über die Antenne 30 empfangene Signal in den Frequenzbereich, und die DFT-Einrichtung 210 transformiert das über die Antenne 40 empfangene Signal in den Frequenzbereich. Die DFT-Einrichtung 200 bildet die Spektralanteile $S_1$ $(k\Delta\omega)$ des Empfangssignals in dem Diversity-Zweig 50, und die DFT-Einrichtung 210 bildet die Spektralanteile $S_2$ $(k\Delta\omega)$ für das Empfangssignal im Diversity-Zweig 55. Dabei ist das Frequenzinkrement durch die Beziehung $\Delta\omega = 2 \pi/T$ gegeben, wobei T die Zeitdauer des zur Fourier-Transformation verwendeten Signalblocks (s. Fig. 5) ist. Der Ausgang der DFT-Einrichtung 200 kann beispielsweise über einen Schalter 205 an einen ersten Eingang eines Multiplizierers 220 angeschlossen sein. Der Ausgang der DFT-Einrichtung 210 ist über einen Schalter 207 mit dem ersten Eingang eines weiteren Multiplizierers 230 verbunden. Die Ausgänge der DFT-Einrichtungen 200 und 210 können ferner über die Schalter 205 und 207 mit den Eingängen einer Funkkanal-Schätzeinrichtung 240 verbunden werden. Die Funkkanal-Schätzeinrichtung 240 ist mit den zweiten Eingängen der Multiplizierer 220 und 230 verbunden. Der Ausgang jedes Multiplizierers 220 und 230 ist einem Addierer 250 zugeführt. Der Ausgang des Addierers 250 ist mit dem Eingang einer Einrichtung 260 verbunden, die das Ausgangssignal des Addierers 250 in den Zeitbereich zurücktransformiert. Die beispielsweise eine inverse diskrete Fourier-Transformation (IDFT) ausführende Einrichtung 260 wird nachfolgend als IDFT-Einrichtung 260 bezeichnet. Die IDFT-Einrichtung 260 ist ausgangsseitig mit dem Demodulator 70 verbunden. Obwohl die in Fig. 2 dargestellte Signalverarbeitungseinrichtung 60 derart aufgebaut ist, daß sie eine Diversity-Kombination auf der Grundlage des Maximum Ratio Combining-Ansatzes durchführt, sind beliebige Realisierungsmöglichkeiten für die Signalverarbeitungseinrichtung 60 denkbar, die eine erfindungsgemäße Diversity-Kombination im Frequenzbereich ermöglichen. Es sei beispielsweise lediglich auf die Diversity-Kombination gemäß dem Selection Combining-Ansatz hingewiesen. Allerdings sei angemerkt, daß die hier beschriebene, auf dem Maximum Ratio Combining-Ansatz basierende Signalverarbeitungsreinrichtung 60 aus herstellungstechnischen Gründen bevorzugt wird. Um die Diversity-Kombination mit den beiden Empfangssignale in den Diversity-Zweigen 50 und 55 im Frequenzbereich durchführen zu können, müssen zunächst Referenzsymbole von der Generatoreinrichtung 160 der Kundeneinrichtung 20 zur Basisstation 10 übertragen werden. Die Steuereinrichtung 130 aktiviert die Sende-Empfangsweiche und die beiden Schalter 205 und 207 derart, daß die über die beiden Funkkanäle 1 und 2 übertragenen Referenzsymbole der Funkkanal-Schätzeinrichtung 240 zugeführt werden. Die Funkkanal-Schätzeinrichtung 240 ist derart ausgebildet, daß sie die Übertragungsfunktionen $H_1(k\Delta\omega)$ und $H_2(k\Delta\omega)$ für den Funkkanal 1 bzw. 2, die dazu gehörenden, konjugiert komplexen Übertragungsfunktionen $H_1^*(k\Delta\omega)$ und $H_2^*(k\Delta\omega)$ sowie die resultierende Funkkanal-Übertragungsfunktion $|H_1(k\Delta\omega)|^2 +$ $|H_2(k\Delta\omega|^2 + \alpha$ aus den übertragenen Referenzsymbolen ermitteln kann. Der Faktor $\alpha$ dient dazu, Rauschanhebungen an den Stellen, an denen die resultierende Funkkanal-Übertragungsfunktion Minima besitzt zu verringern. Anschließend schaltet die Steuereinrichtung 130 die Schalter 205 und 207 erneut, so daß die an den Antennen 30 und 40 empfangenen Nutzsignale über die beiden DFT-Einrichtungen 200 und 210 an die Eingänge der Multiplizierer 220 bzw. 230 gelangen. Die in Fig. 2 dargestellte beispielhafte Signalverarbeitungseinrichtung 60 führt die erfindungsgemäße MRC-Diversity-Kombination und die Entzerrung des kombinierten Siganls im Frequenzbereich wie folgt durch:

1. Der Multiplizierer 220 multipliziert jeden von der DFT-Einrichtung 200 gelieferten Spektralanteil mit der konjugiert komplexen Übertragungsfunktion des Funkkanals 1 und dividiert das Produkt durch die resultierende Funkkanal-Übertragungsfunktion.

2. Der Multiplizierer 230 multipliziert jeden von der DFT-Einrichtung 210 gelieferten Spektralanteil mit der konjugiert komplexen Übertragungsfunktion des Funkkanals 2 und dividiert das Produkt durch die resultierende Funkkanal-Übertragungsfunktion.

3. Das Ausgangsspektrum jedes Multiplizieres 220 und 230 wird im Addierer 240 kombiniert.

Das Ausgangsspektrum des Addierers 240 ist dann das im Frequenzbereich Diversity-kombinierte und entzerrte Spektrum des Empfangssignals.

Grundsätzlich ist es auch möglich, die Diversity-Kombination und die Entzerrung des Empfangssignals in zwei eindeutig getrennten Schritten durchzuführen. Dies wird erreicht, indem der Multiplizierer 220 und der Multiplizierer 230 die von den jeweiligen DFT-Einrichtungen 200 bzw. 210 gelieferten Spektralanteile nur mit der dazugehörenden konjugiert komplexen Übertragungsfunktion des Funkkanals 1 bzw. 2 multiplizieren. Anschließend werden die Produktspektren der beiden Multiplizierer 220 und 230 addiert, wodurch die MRC-Diversity-Kombination abgeschlossen wird. Das kombinierte Signal wird danach zur Entzerrung durch die resultierende Funkkanal-Übertragungsfunktion dividiert. Das Endergebnis ist in beiden geschilderten Fällen identisch. Dieses Ausgangssignal, das bespielsweise am Addierer 250 anliegt, wird der IDFT-Einrichtung 260 zugeführt, die mit dem Summenspektrum eine inverse diskreten Fourier-Transformation in den Zeitbereich vornimmt. Das erhaltene Zeitsignal wird anschließend zum Demodulator sowie einem Detektor (nicht dargestellt) zugeführt.

Mit dem erfindungsgemäßen Verfahren wird vergleichbar wie bei einem Mehrträgerverfahren die Intersymbolinterferenz entfernt, wenn die Übertragung blockweise erfolgt und ein zwischen den Blöcken eingefügtes Guard-Intervall eine zeitliche Länge aufweist, die größer ist als die Impulsantwort des Funkkanals. Ein geeigneter Zeitverlauf von gesendeten Signalblöcken ist dazu in Fig. 5 dargestellt. Beispielsweise sei eine Gesamtblocklänge von 51,2 µs angenommen. Davon sind 6,4 µs als Guard-Intervall und 44,8 µs als Nutzintervall vorgesehen. Nimmt man eine Symboldauer von 0,1 µs an, so könnten pro Signalblock 448 Symbole übertragen werden. Bei Verwendung eines 4-QAM-Modulationsverfahrens (QAM = Quadratur-Amplituden-Modulation) entspräche dies einer Übertragung von 896 Bits pro Block. Damit könnten beispielsweise die Inhalte zweier aus jeweils 424 Bit bestehenden ATM-Zellen (ATM = Asynchronous Transfer Modus) in einem Signalblock übertragen werden. Zusätzlich könnten noch 24 Bit pro ATM-Zellen für eine Kanalcodierung, z.B. mittels eines Reed-Solomon-Codes, benutzt werden.

In Fig. 6 sind für eine 4-QAM-Modulation die aus einer Computersimulation gewonnenen Bitfehlerraten BER (BER = Bit Error Rate) für die Uplink-Übertragung als Funktion des mittleren Signal-/Rausch-Leistungsverhältnisses SNR (SNR = Signal-to-Noise Ratio) dargestellt. Dabei wurden die zeitlichen Parameter aus Fig. 5 benutzt. Die Kurve a) zeigt als Referenz die Bitfehlerrate für eine Übertragung über einen verzerrungsfreien Kanal, wobei die Basisstation 10 nur eine Antenne benutzt. In diesem Fall treten nur Störungen durch das additive, gaussverteilte, weiße Rauschen AWGN (AWGN = Additive White Gaussian Noise) an der Empfängereinrichtung 80 auf. Erfolgt im AWGN-Kanal ein Diversity-Empfang gemäß der Erfindung, so erhält man einen Gewinn bezüglich des Signal-Rausch-Leistungsverhältnisses von 3 dB. In der Kurve b) ist das Verhalten für einen nicht frequenzselektiven Rayleigh-Kanal bei einem Empfang an der Basisstation 10 mit nur einer Antenne dargestellt. Dieses Verhalten hat man bei Mehrträger-Verfahren sowohl in nicht frequenzselektiven als auch in frequenzselektiven Schwundkanälen. Bezogen auf eine Bitfehlerrate von $10^{-4}$ ergibt sich eine Verschlechterung von etwa 22 dB gegenüber dem AWGN-Kanal. Die Kurve c) zeigt bei gleichen Kanalbedingungen wie bei Kurve b) das Ergebnis bei einer Verwendung von zwei Diversity-Antennen. Durch die Kombination dekorrelierter Schwundprozesse wird eine deutliche Verbesserung gegenüber der Kurve b) erreicht (etwa 14 dB bei einer Bitfehlerrate von $10^{-4}$). Das für städtische Gebiete von COST 207 definierte frequenzselektive Kanalmodell "Typical Urban" ergibt ohne einen Antennen-Diversity an der Basisstation 10 das in Kurve d) gezeigte Bitfehlerverhalten. Dieses Ergebnis ist bereits ohne Diversity wesentlich günstiger als das durch die Kurve b) gezeigte Bitfehlerverhalten, was auf den bei frequenzselektiven Schwund erzielbaren Mehrwege-Gewinn zurückzuführen ist. In der Kurve e) ist erkennbar, daß sich für dieses Kanalmodell bei dem Einsatz eines Diversity-Empfängers eine nochmalige, deutliche Verbesserung des Bitfehlerverhaltens ergibt. Man erreicht fast die für den verzerrungsfreien Kanal geltende Kurve a). Dies gilt in ähnlicher Weise auch für das Kanalmodell "RURAL AREA", dessen Bitfehlerverhalten für einen Diversity-Empfänger in Kurve f) dargestellt ist.

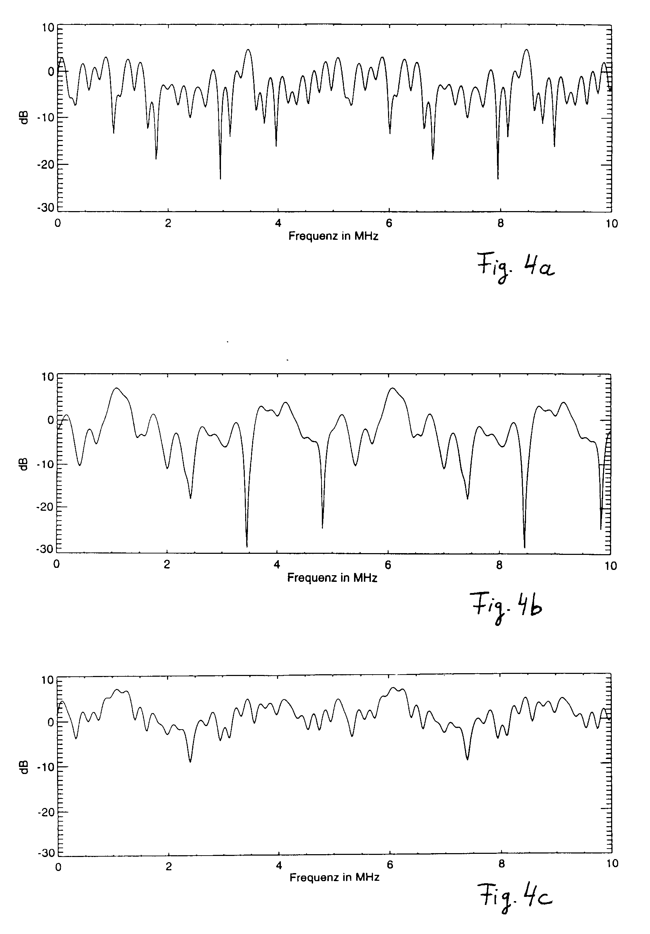

Das vorteilhafte Verhalten einer Diversity-Kombination auf der Grundlage eines Maximum Ratio Combining-Ansatzes läßt sich am besten aus den Fig. 4a bis 4c nachvollziehen. In der Fig. 4a ist beispielsweise der Betrag für eine Übertragungsfunktion des Funkkanals 1 und in der Fig. 4b der Betrag einer Übertragungsfunktion für den Funkkanal 2 dargestellt. Die in Fig. 4a und 4b dargestellten Musterfunktionen wurden mit Hilfe eines synthetischen Kanalmodells "Typical Urban" entsprechend der Definitionen von COST 207 erzeugt. In Fig. 4c ist die resultierende Funkkanal-Übertragungsfunktion nach der Diversity-Kombination gemäß der Erfindung dargestellt. Während die in Fig. 4a und 4b dargestellten Übertragungsfunktionen der beiden Funkkanäle 1 und 2 Amplitudeneinbrüche bis zu 30 dB aufweisen, zeigt die kombinierte Übertragungsfunktion nach Fig. 4c lediglich Einbrüche in der Größenordnung von 10 dB.

Wir betrachten nunmehr Fig. 3, die die Signalaufbereitungseinrichtung 110 der Basisstation 10 näher darstellt. Die in Fig. 3 dargestellte Signalaufbereitungseinrichtung 110 ist Teil der Sendeeinrichtung 90. Das von dem Modulator 100 kommende, modulierte, hochfrequente Trägersignal wird einer Einrichtung 270 zugeführt, die das Zeitsignal mit Hilfe einer diskreten Fourier-Transformation in den Frequenzbereich transformiert. Im nachfolgenden wird die Einrichtung 270 als DFT-Einrichtung bezeichnet. Der Ausgang der DFT-Einrichtung 270 ist mit einem ersten Eingang eines in den Zweig 120 geschalteten Multiplizieres 300 und mit einem ersten Eingang eines zweiten in den Zweig 125 geschalteten Multiplizierers 320 verbunden. Der Multiplizierer 300 ist ausgangsseitig mit einer IDFT-Einrichtung 310 verbunden, wohingegen der Ausgang des Multiplizierers 320 an dem Eingang einer IDFT-Einrichtung 330 anliegt. Jede IDFT-Einrichtung 310 und 330 führt mit dem Sendesignal jedes Zweiges 120 bzw. 125 eine inverse diskrete Fourier-Transformation in den Zeitbereich durch. Die IDFT-Einrichtungen 310 und 330 können jeweils über einen Digital-Analogwandler und einen Hochfrequenzumsetzer mit der Antenne 30 bzw. 40 verbunden sein. Eine Funkkanal-Schätzeinrichtung 340 ist ähnlich wie die Funkkanal-Schätzeinrichtung 240 ausgebildet, die in der Signalverarbeitungseinrichtung 60 benutzt wird. Jeweils ein Ausgang der Funkkanal-Schätzeinrichtung 340 ist mit dem Multiplizierer 300 bzw. 320 verbunden. Auch die Funkkanal-Schätzeinrichtung 340 ist daher in der Lage, die Übertragungsfunktionen und die dazugehörenden konjugiert komplexen Übertragungsfunktionen der beiden Funkkanäle 1 und 2 sowie die resultierende Funkkanal-Übertragungsfunktion zu ermitteln. Allerdings benötigt die Funkkanal-Schätzeinrichtung 340 ebenfalls die von der Kundeneinrichtung 20 gesendeten Referenzsymbole. Dabei wird verlangt, daß die Zeitdauer zwischen der Ermittlung der Funkkanal-Übertragungsfunktionen und der Signalaussendung im Downlink-Betrieb wesentlich kürzer sein muß als die Kohärenzzeit der Funkkanäle 1 und 2. Denkbar ist einmal, daß die Schalter 205 und 207 in eine dritte Stellung umschaltbar sind, so daß die Referenzsymbole über die DFT-Einrichtungen 200 und 210 zur Schätzeinrichtung 340 übermittelt werden können. Eine weitere Möglichkeit besteht darin, daß die Funkkanal-Schätzeinrichtung 240 der Empfangseinrichtung 80 die Aufgaben der Funkkanal-Schätzeinrichtung 340 der Sendeeinrichtung 90 vollständig mit übernehmen und diese somit ersetzen kann. Dies ist aber nur dann möglich, wenn die Downlink-Übertragung eines Digitalsignals im Zeitduplex auf der gleichen Frequenz erfolgt wie die Uplink-Übertragung. Diese Technik ist auch als Time-Division-Duplex (TDD) bekannt.
Die erfindungsgemäße Funktionsweise der Signalaufbereitungschaltung 110 wird nunmehr erläutert. Das von der Basisstation 10 auszusendende Digitalsignal wird von der Signalaufbereitungseinrichtung 110 derart im Frequenzbereich vorverzerrt, daß das über die beiden Antennen 30 und 40 abgestrahlte Signal nahezu unverzerrt von der Empfangsantenne 130 der Kundeneinrichtung 20 empfangen werden kann. Dazu wird das vom Modulator 90 kommende und von der DFT-Einrichtung 270 in den Frequenzbereich transformierte Signal auf den Zweig 120 gelegt, mit der konjugiert komplexen Übertragungsfunktion des Funkkanals 1 im Multiplizierer 300 multipliziert und durch die resultierende Übertragungsfunktion dividiert. Das so vorverzerrte Spektrum durchläuft die IDFT-Einrichtung 310. Am Ausgang der IDFT-Einrichtung 310 liegt ein Zeitsignal an, das über die im Sendebetrieb arbeitende Antenne 30 und über den verzerrten Funkkanal 1 zur Empfangsantenne 130 der. Kundeneinrichtund 20 übertragen wird. Das an den Zweig 125 angelegte Frequenz-transformierte Signal wird mit der konjugiert komplexen Übertragungsfunktion des Funkkanals 2 im Multiplizierer 320 multipliziert und durch die resultierende Übertragungsfunktion dividiert. Das im Frequenzbereich vorverzerrte Signal durchläuft anschließend die IDFT-Einrichtung 330. Das am Ausgang der IDFT-Einrichtung 330 anliegende Zeitsignal wird anschließend über die Antenne 40 und den verzerrten Funkkanal 2 zur Empfangsantenne 130 übertragen. Die über die verzerrten Funkkanäle 1 und 2 übertragenen vorverzerrten Signale können von der Empfangsantenne 130 der Kundeneinrichtung 20 in der Summe nahezu unverzerrt empfangen werden. Eine Entzerrung des Empfangsignals in der Kundeneinrichtung 20 entfällt somit.
Deshalb kann die Empfangseinrichtung der Kundeneinrichtung 20 mit einem geringeren Komplexitätsgrad hergestellt und daher kostengünstiger aufgebaut werden.

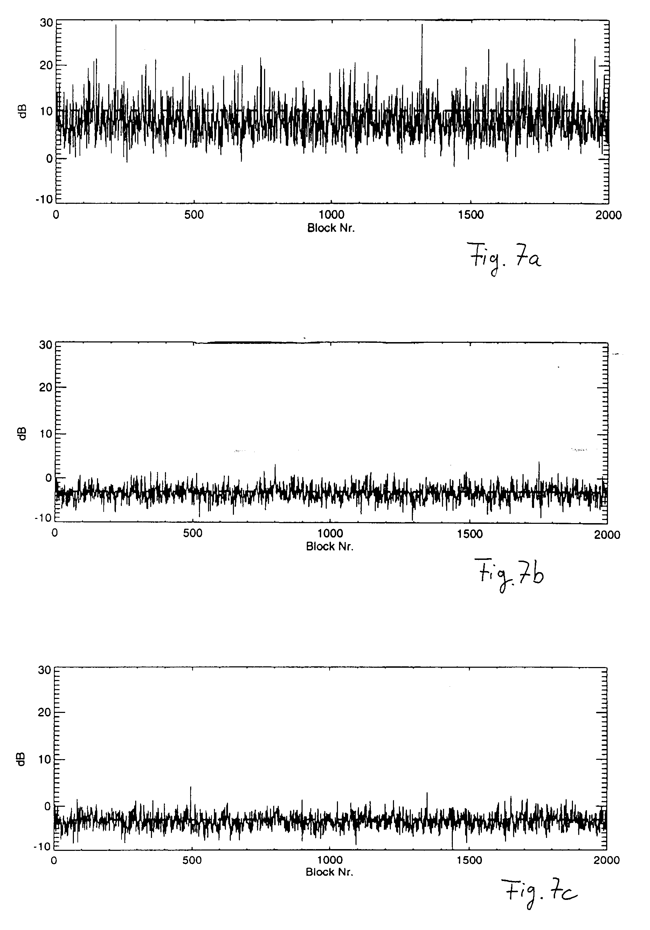

In Fig. 7a ist der zeitliche Verlauf der Sendeleistung für 2000 gesendete Signalblöcke gemäß einer Down-Link-Übertragung dargestellt, bei der die Signale in der Basisstation 10 vorverzerrt worden sind. Als Bezugsleistung wurde die Sendeleistung gewählt, die bei einem idealen unverzerrten Kanal benötigt wird, um die gleiche Bitfehlerrate wie bei einem verzerrten Kanal (s. Kurve a in Fig. 6) zu erhalten. Die in Fig. 7a dargestellte Kurve gibt daher die Signalleistung an, die bei Verwendung einer einzigen Antenne an der Basisstation 10 für einen verzerrungsfreien Empfang an der Kundeneinrichtung 20 aufgebracht werden muß. Man erkennt, daß durchschnittlich eine um 10 dB und im Einzelfall sogar um eine bis zu 30 dB höhere Leistung aufgebracht werden muß. Dies ist für eine praktische Anwendung in der Regel nicht realisierbar. Demgegenüber wird bei der Verwendung von zwei Sendeantennen 30, 40 jeweils eine mittlere Sendeleistung benötigt, die um 3 dB unter der Sendeleistung liegt, die bei Verwendung einer Sendeantenne und eines verzerrungsfreien Kanals benötigt wird. Dies bedeutet, daß bei einer Vorverzerrung im Mittel die gleiche Leistung aufgewendet werden muß wie bei einem unverzerrten Kanal, wenn die Basisstation 10 nur eine Sendeantenne benutzt. Die zeitlichen Schwankungen aufgrund der Zeitvarianz der Funkkanäle 1 und 2 sind bei zwei Antennen 30, 40 deutlich geringer als beim Einsatz nur einer Antenne. In dem untersuchten Beispiel wird kurzzeitig eine Leistung benötigt, die nur um ca. 4 dB über dem Bezugswert liegt. Somit kann bei Verwendung von zwei Sendeantennen 30, 40 die beschriebene Vorverzerrung im Frequenzbereich leistungsneutral und mit relativ geringen Anforderungen an die Dynamik der sendeseitigen Komponenten realisiert werden.

**Patentansprüche**

1. Verfahren zum bidirektionalen Übertragen von hochratigen Digitalsignalen zwischen wenigstens einer Basisstation (10) und wenigstens einer Kundeneinrichtung (20) über eine Funkverbindung mit folgenden Schritten:

   a) das von der Kundeneinrichtung abgestrahlte und sich über mehere Funkkanäle (1, 2) ausbreitende Digitalsignal wird an wenigstens zwei räumlich getrennt angeordneten Diversity-Antennen (30, 40) einer Empfangseinrichtung (80) der Basisstation (10) empfangen (Diversity-Empfang), wobei jede Diversity-Antenne (30, 40) einem getrennten Diversity-Zweig (50, 55) zugeordnet wird,
   b) das Empfangssignal jedes Diversity-Zweiges (50, 55) wird in den Frequenzbereich (200, 210) transformiert,
   c) die Empfangssignale werden im Frequenzbereich einer Diversity-Kombination (220-250) unterworfen,
   d) das kombinierte Signal wird im Frequenzbereich entzerrt (220-250), und
   e) das kombinierte und entzerrte Digitalsignal wird in den Zeitbereich (260) zurücktransformiert.

2. Verfahren nach Anspruch 1, dadurch gekennzeichnet, daß vor der Ausführung des Schrittes c) die Kundeneinrichtung zu vorbestimmten Zeitintervallen Referenzsymbole aussendet, aus denen in der Basisstation die Übertragungsfunktion für jeden Funkkanal ermittelt wird, über den sich das abgestrahlte Digitalsignal zur jeweiligen Diversity-Antenne ausbreitet.

3. Verfahren nach Anspruch 2, dadurch gekennzeichnet, daß der Schritt c) die Einzelschritte umfaßt:

   c1) in der Basisstation wird zu jeder Funkkanal-Überragungsfunktion die dazugehörende konjugiert komplexe Funkkanal-Übertragungsfunktion berechnet und das Empfangssignal jedes Diversity-Zweiges wird mit der jeweiligen konjugiert komplexen Funkkanal-Übertragungsfunktion multipliziert,
   c2) die in c1) gebildeten Produktsignale werden addiert,

und daß Schritt d) die folgenden Schritte umfaßt:

   d1) es wird die resultierende Funkkanal-Übertragungsfunktion

   $$|H_1(\omega)|^2 + \cdots + |H_n(\omega)|^2$$

   berechnet, wobei n die Anzahl der Funkkanäle ist, und
   d2) das in c2) gebildete Kombinationssignal wird durch die in d1) berechnete resultierende Funkkanal-Übertragungsfunktion dividiert.

4. Verfahren nach Anspruch 3, dadurch gekennzeichnet, daß der Schritt d) die folgenden Schritte umfaßt:

   d1') es wird die resultierende Funkkanal-Übertragungsfunktion

   $$|H_1(\omega)|^2 + \cdots + |H_n(\omega)|^2 + \alpha$$

   berechnet, wobei der Faktor $\alpha$ proportional zum inversen mittleren Signal-/Rauschleistungsverhältnis an der Empfangseinrichtung der Basisstation ist, und
   d2') das in c2) gebildte Kombinationssignal wird durch die in d1') berechnete Funkkanal-Übertragungsfunktion dividiert.

5. Verfahren nach einem der Ansprüche 1 bis 4, dadurch gekennzeichnet, daß die Digitalsignale blockweise übertragen werden und daß zwischen die einzelnen Blöcke jeweils ein Guard-Intervall eingefügt wird, dessen zeitliche Länge größer ist als die Impulsantwort jedes Funkkanals.

6. Verfahren nach einem der Ansprüche 1 bis 5, dadurch gekennzeichnet, daß

   a) das von der Basisstation zur Kundeneinrichtung zu übertragende hochratige Digitalsignal in den Frequenzbereich transformiert und an wenigstens zwei parallelgeschaltete Zweige angelegt wird, daß
   b) das Signal jedes Zweiges im Frequenzbereich vorverzerrt wird, daß
   c) das vorverzerrte Signal jedes Zweiges in den Zeitbereich zurücktransformiert wird, und daß
   d) das zurücktransformierte Signal jedes Zweiges über eine dem Zweig zugeordnete Antenne abgestrahlt wird, so daß an der Empfangseinrichtung der Kundeneinrichtung ein unverzerrtes Signal anliegt.

**7.** Verfahren nach Anspruch 6,
dadurch gekennzeichnet, daß die Kundeneinrichtung zu vorbestimmten Zeitpunkten Referenzsymbole aussendet, aus denen in der Basisstation die Übertragungsfunktion für jeden Funkkanal ermittelt wird, über den sich das von der Basisstation zur Kundeneinrichtung zu sendende Signal des entsprechenden Zweiges ausbreitet, wobei die Referenzsymbole im Zeitduplex mit einer Frequenz übertragen werden, die der Sendefrequenz der Basisstation entspricht.

**8.** Verfahren nach Anspruch 7,
dadurch gekennzeichnet, daß für jede Funkkanal-Übertragungsfunktion die dazu gehörende konjugiert komplexe Funkkanal-Übertragungsfunktion berechnet wird, und daß
das Signal in jedem Zweig mit der entsprechenden konjugiert komplexen Übertragungsfunktion multipliziert und durch die in der Basisstation berechnete resultierende Funkkanal-Übertragungsfunktion

$$|H_1(\omega)|^2 + \cdot\cdot\cdot + |H_n(\omega)|^2$$

oder

$$|H_1(\omega)|^2 + \cdot\cdot\cdot + |H_n(\omega)|^2 + \alpha$$

dividiert wird, wobei n die Anzahl der Funkkanäle und $\alpha$ ein Faktor ist, der proportional zum inversen mittleren Signal-/Rauschleistungsverhältnis ist.

**9.** Basisstation für ein digitales Funknetz zur Ausführung des Verfahrens nach einem der Ansprüche 1 bis 8 umfassend:
eine Diversity-Empfangseinrichtung (80) mit wenigstens zwei räumlich getrennt angeordneten, je einem Diversity-Zweig (50, 55) zugeordneten Diversity-Antennen (30, 40), die ein sich über mehrer Funkkanäle (1, 2) ausbreitendes hochratiges Digitalsignal empfangen, und mit
einer Signalverarbeitungseinrichtung (60), die das Empfangssignal jedes Diversity-Zweiges (50, 55) in den Frequenzbereich transformiert (200, 210), mit den transformierten Empfangssignalen eine Diversity-Kombination ausführt, das kombinierte Signal entzerrt und in den Zeitbereich zurücktransformiert.

**10.** Basisstation nach Anspruch 9,
dadurch gekennzeichnet, daß die Signalverarbeitungseinrichtung eine Steuereinheit (130) und eine Funkkanal-Übertragungsfunktion-Schätzeinrichtung (240) aufweist, wobei die Steuereinheit (130) die von einer Kundeneinrichtung (20) zu vorbestimmten Zeitpunkten ausgesendeten Referenzsymbole zur Schätzeinrichtung (240) weiterleitet.

**11.** Basisstation nach Anspruch 10,

dadurch gekennzeichnet, daß die Schätzeinrichtung (240) aus den Referenzsymbolen die zu jedem Funkkanal gehörende Übertragungsfunktion ermitteln kann.

**12.** Basisstation nach Anspruch 11,
dadurch gekennzeichnet, daß die Signalverarbeitungseinrichtung (60) die zu jeder Funkkanal-Übertragungsfunktion gehörende konjugiert komplexe Übertragungsfunktion und die resultierende Funkkanal-Übertragungsfunktion

$$|H_1(\omega)|^2 + \cdot\cdot\cdot + |H_n(\omega)|^2$$

oder

$$|H_1(\omega)|^2 + \cdot\cdot\cdot + |H_n(\omega)|^2 + \alpha$$

berechnen kann, wobei n die Anzahl der Funkkanäle (1, 2) und der Faktor $\alpha$ proportional zum inversen mittleren Signal-/Rauschleistungsverhältnis der Diversity-Empfangseinrichtung (80) ist.

**13.** Basisstation nach Anspruch 12,
dadurch gekennzeichnet, daß jeder Diversity-Zweig (50, 55) einen Multiplizierer (220, 230) enthält, an dessen einem Eingang das jeweilige Empfangssignal anliegt und dessen anderer Eingang mit der Schätzeinrichtung (240) verbunden ist.

**14.** Basisstation nach Anspruch 13,
gekennzeichnet durch einen Addierer (250), an den der Ausgang jedes Multiplizierers (220, 230) angeschlossen ist.

**15.** Basisstation nach einem der Ansprüche 9 bis 14,
gekennzeichnet durch eine Sendeeinrichtung (90) mit folgenden merkmalen:
wenigstens zwei Aritennen (30, 40),
eine Einrichtung (270) zur Transformation des abzusendenden hochratigen Digitalsignals in den Frequenzbereich, wenigstens zwei parallel geschaltete Zweige (120, 125), die je eine Einrichtung (310, 330) zur Rücktransformation des abzusendenden Signals in den Zeitbereich enthalten, und einen im Frequenzbereich betriebenen Vorverzerrer (300, 320, 340).

**16.** Basisstation nach Anspruch 15,
dadurch gekennzeichnet, daß der Vorverzerrer eine Funkkanal-Schätzeinrichtung (340) und in jedem Zweig (120, 125) einen mit der Schätzeinrichtung (340) verbundenen Multiplizierer (300, 320) aufweist.

**17.** Basisstation nach Anspruch 16,
dadurch gekennzeichnet, daß die Funkkanal-Schätzeinrichtung (340) aus den von einer Kundeneinrichtung kommenden Referenzsymbole die Übertragungsfunktion für jeden Funkkanal (1, 2) ermittelt.

18. Basisstation nach Anspruch 17, dadurch gekennzeichnet, daß die Schätzeinrichtung (340) die zu jeder Übertragungsfunktion gehörende konjugiert komplexe Übertragungsfunktion und die resultierende Funkkanal-Übertragungsfunktion

$$|H_1(\omega)|^2 + \cdot \cdot \cdot + |H_n(\omega)|^2$$

oder

$$|H_1(\omega)|^2 + \cdot \cdot \cdot + |H_n(\omega)|^2 + \alpha$$

berechnen kann, wobei n die Anzahl der Funkkanäle (1, 2) und $\alpha$ ein Faktor ist, der proportional zum inversen mittleren Signal-/Rauschleistungsverhältnis der Diversity-Empfangseinrichtung (80) ist.

19. Basisstation nach Anspruch 18, dadurch gekennzeichnet, daß die Sendeeinrichtung (90) das auszusendende Signal in jedem Zweig (120, 125) mit der entsprechenden konjugiert komplexen Funkkanal-Übertragungsfunktion multipliziert und durch eine der beiden resultierenden Funkkanal-Übetragungsfunktionen dividiert.

20. Digitales Funknetz zur Ausführung des Verfahrens nach einem der Ansprüche 1 bis 8 mit wenigstens einer Basisstation (10) nach einem der Ansprüche 9 bis 19 und wenigstens einer mobilen oder stationären Kundeneinrichtung (20), die einen Demodulator (140), einen Modulator (150), einen Generator (160) zum Erzeugen von Referenzsymbolen, eine Steuereinheit (170) und eine Sende-/Empfangsantenne (130) aufweist.

Fig. 1

$$\frac{H_1^*(\omega)}{|H_1(\omega)|^2+|H_2(\omega)|^2+\alpha}$$

$$\frac{H_2^*(\omega)}{|H_1(\omega)|^2+|H_2(\omega)|^2+\alpha}$$

zum Demod

Fig. 2

*110*

$$\frac{H_1{}^*(\omega)}{|H_1(\omega)|^2+|H_2(\omega)|^2+\alpha}$$

*300*   *310*

vom Mod **90** → **DFT** **270** → × **300** → **IDFT** **310** → **120**

**340** ← von 200

← von 210

× **320** → **IDFT** → **125** **330**

$$\frac{H_2{}^*(\omega)}{|H_1(\omega)|^2+|H_2(\omega)|^2+\alpha}$$

**Fig. 3**

Guard - Intervall

|← 44,8μs →|← 6,4μs →|

Block 1    Block 2

|←——— 51,2μs ———→|←——— 51,2μs ———→|    Zeit

**Fig. 5**

Fig. 4a

Fig. 4b

Fig. 4c

a) AWGN-Kanal ohne Diversity
b) Rayleigh-Kanal ohne Diversity
c) Rayleigh-Kanal mit Diversity
d) Typical Urban ohne Diversity
e) Typical Urban mit Diversity
f) Rural Area mit Diversity

4-QAM, Uplink, Frequenzbereichs-Entzerrer

Fig. 6

Fig. 7a

Fig. 7b

Fig. 7c